# EUROPEAN PATENT APPLICATION

(11) **EP 2 535 997 A2**
(43) Date of publication of application: **19.12.2012**
(21) Application number: 12171479.4
(22) Date of filing: 11.06.2012
(51) Int. Cl.: H02J 3/14

(54) **Systems, methods, and apparatus for evaluating load power consumption utilizing a power meter**

(30) Priority: 15.06.2011 US 201113160994
(71) Applicant: General Electric Company, Schenectady, New York 12345 (US)
(72) Inventor: Bell, Mary C., Alpharetta, GA Georgia 30004 (US); Lecours, Bernard Jacques, Atlanta, GA Georgia 30324 (US)
(74) Representative: Picker, Madeline Margaret

(57) **Abstract**

Systems (100), methods (200), and apparatus for evaluating load power consumption utilizing a power meter (105) are provided. A power line signal for a structure associated with a power meter (105) may be measured (205) by the power meter (105). The power line signal may be decomposed (210) by the power meter (105) into respective power consumption data for a plurality of individual loads (115a-n) powered by the power line signal. The power consumption data for a load (115) included in the plurality of individual loads (115a-n) may be compared (230) by the power meter (105) to expected power consumption data for the load (115). Based at least in part upon the comparison, the power meter (105) may determine (235) whether the load is operating within one or more desired parameters.

## Description

### BACKGROUND OF THE INVENTION

Embodiments of the invention relate generally to power meters, and more specifically to systems, methods, and apparatus for evaluating load power consumption utilizing a power meter that decomposes a metered signal into constituent energy consumptions for individual loads.

The majority of total retail electrical power sales result from residential and commercial sales. As the cost of energy continues to increase, customers have become more conscious of their consumption and more thoughtful in terms of sustainable energy planning. Recently, customers have begun to seek ways in which power cost savings may be achieved within the home. To achieve this end, customers desire energy consumption data for individual appliances and/or electrical loads. In this regard, customers may identify areas in which relatively large amounts of power are being utilized. However, customers are unwilling to incur the expense required to install power sensors on each appliance and load. Accordingly, systems, methods, and apparatus for evaluating load power consumption utilizing a power meter that decomposes a metered signal are desirable. Additionally, systems, methods, and apparatus for evaluating load power consumption data to determine whether loads are operating properly are desirable.

### BRIEF DESCRIPTION OF THE INVENTION

Some or all of the above needs and/or problems may be addressed by certain embodiments of the invention. Embodiments of the invention may include systems, methods, and apparatus for evaluating load power consumption utilizing a power meter. According to one embodiment of the invention, a method for evaluating load power consumption utilizing a power meter is disclosed. A power line signal for a structure associated with a power meter may be measured by the power meter. The power line signal may be decomposed by the power meter into respective power consumption data for a plurality of individual loads powered by the power line signal. The power consumption data for a load included in the plurality of individual loads may be compared by the power meter to expected power consumption data for the load. Based at least in part upon the comparison, the power meter may determine whether the load is operating within one or more desired parameters.

According to another embodiment of the invention, a power meter that evaluates load power consumption is provided. The power meter may include at least one memory, at least one sensor, and at least one processor. The at least one memory may be configured to store computer-executable instructions. The at least one sensor may be configured to monitor at least one desired energy consumption variable associated with a plurality of individual loads and generate at least one output signal associated with the monitoring. The at least one processor is configured to access the at least one memory and execute the computer-executable instructions to: receive the at least one output signal from the at least one sensor; decompose the at least one output signal into respective power consumption data for the plurality of individual loads; compare the power consumption data for a load included in the plurality of individual loads to expected power consumption data for the load; and determine, based at least in part upon the comparison, whether the load is operating within one or more desired parameters.

Additional systems, methods, apparatus, features, and aspects are realized through the techniques of various embodiments of the invention. Other embodiments and aspects of the invention are described in detail herein and are considered a part of the claimed inventions. Other embodiments and aspects can be understood with reference to the description and the drawings.

### BRIEF DESCRIPTION OF THE DRAWINGS

Having thus described the invention in general terms, reference will now be made to the accompanying drawings, which are not necessarily drawn to scale, and wherein:
FIG. 1 is a block diagram of one example system that facilitates the evaluation of load power consumption, according to an illustrative embodiment of the invention.
FIG. 2 is a flow diagram of an example method for evaluating load power consumption, according to an illustrative embodiment of the invention.

### DETAILED DESCRIPTION OF EMBODIMENTS OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are systems, methods, and apparatus for evaluating load power consumption utilizing a power meter. In certain embodiments, a power meter may be provided, and the power meter may be configured to monitor a power line signal for a structure, such as a residence, commercial structure, or industrial structure. For example, the power meter may include one or more sensors configured to monitor at least one desired energy consumption variable associated with a plurality of loads supplied by a power line that provides power to the structure. Examples of energy consumption variables that may be monitored include, but are not limited to, voltage, current, and/or temperature. The one or more sensors may generate an output signal that is evaluated by the power meter.

The power meter may decompose a monitored signal into respective power consumption data for a plurality of individual loads. For example, the power meter may determine an instantaneous state of a power line and perform a grid scene analysis to identify individual and combined load signatures of the plurality of individual loads. Once power consumption data or a power consumption signature is determined for a load, the power meter may compare the power consumption data to expected power consumption data for the load, such as a stored expected power consumption signature for the load or an expected power consumption signature calculated from historical power consumption data for the load. In this regard, a determination may be made as to whether the load is operating properly and/or within one or more desired parameters. In certain embodiments, the power meter may additionally compare the power consumption data to stored power consumption data associated with one or more operational problems associated with the load, and the power meter may identify an operation problem based at least in part upon the comparison. For example, the power meter may determine that a refrigerator likely has a faulty compressor.

In the event that the power meter determines that a load is not operating within one or more desired parameters, the power meter may take any number of desired control actions. For example, the power meter may generate and communicate alert messages to a device associated with a consumer or user (e.g., a personal computer, a mobile device, etc.). Additionally, in certain embodiments, the power meter may generate any number of graphical presentations and/or graphical user interfaces that are communicated to one or more user devices. A wide variety of information may be included in a graphical presentation as desired, such as power consumption data for a load, expected power consumption data for the load, and/or an indication of whether the load is operating within one or more desired parameters.

Various embodiments of the invention may include one or more special purpose computers, systems, and/or particular machines that facilitate the evaluation of load power consumption by a power meter. A special purpose computer or particular machine may include a wide variety of different software modules as desired in various embodiments. As explained in greater detail below, in certain embodiments, these various software components may be utilized to facilitate the decomposition of a power line signal into consumption data for a plurality of individual loads and the determination of whether the loads are operating within one or more desired parameters. Additionally, these various software components may be utilized to provide load power consumption data and/or identified alert situations to a user.

Certain embodiments of the invention described herein may have the technical effect of providing load power consumption evaluations via a power meter. For example, a power meter may decompose a monitored power line signal into consumption data associated with individual loads, and the power meter may determine whether each of the individual loads is operating within desired conditions. In this regard, the power meter may identify faulty loads and/or appliances, and the power meter may provide users with information that may be utilized to more effectively conserve energy.

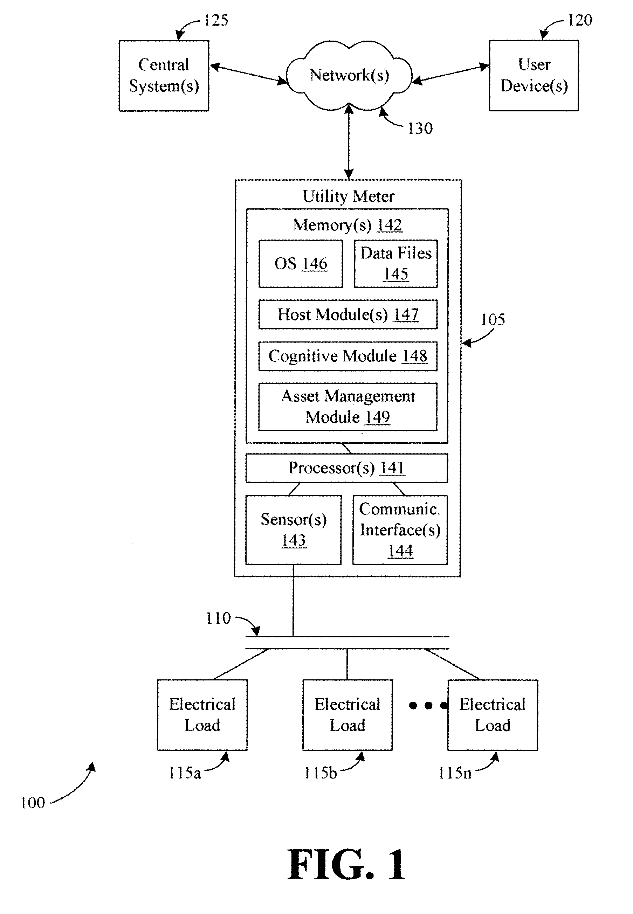

FIG. 1 is a block diagram of one example system 100 that facilitates the evaluation of load power consumption, according to an illustrative embodiment of the invention. The system 100 illustrated in FIG. 1 may include a utility meter or power meter 105 that is connected or attached to a power line 110 configured to supply power to any number of electrical loads 115a-n associated with a structure. In certain embodiments, the system 100 may further include any number of user devices 120 and/or a central system 125 in communication with the power meter 105 via one or more networks 130, such as the Internet and/or an Advanced Metering Infrastructure ("AMI") network.

The power meter 105 may be any suitable power meter that may be connected to a distribution system or power distribution grid. A wide variety of suitable power meters may be utilized as desired in various embodiments, such as a single-phase meter or a three-phase meter. The power meter 105 may be configured to measure an amount of electrical energy (e.g., kilowatt hours, etc.) or electrical power that is supplied to an associated location, residence, business, household, or machine. In certain embodiments, the power meter 105 may be a smart meter, digital meter, or an advanced meter that is configured to identify consumption in relatively greater detail than a conventional meter. For example, a smart power meter 105 may facilitate real-time or near real-time readings, power outage notification, and/or power quality monitoring. Additionally, as described in greater detail below, the power meter 105 may be configured to decompose a monitored power line signal and determine power consumption data for a plurality of individual loads.

The power meter 105 may include any number of suitable computer processing components that facilitate the operation of the power meter, the decomposition of a monitored power line signal, the comparison of power consumption data for individual loads 115a-n to expected power consumption data, and/or the determination of whether one or more loads 115a-n are operating within desired parameters. Examples of suitable processing devices that may be incorporated into the power meter 105 include, but are not limited to, application-specific circuits, microcontrollers, minicomputers, other computing devices, and the like. As such, the power meter 105 may include any number of processors 141 that facilitate the execution of computer-readable instructions. By executing computer-readable instructions, the power meter 105 may include or form a special purpose computer or particular machine that facilitates the evaluation of load power consumption.

In addition to one or more processor(s) 141, the power meter 105 may include one or more memory devices 142, one or more sensors 143 and/or one or more communications and/or network interfaces 144. The one or more memory devices 142 or memories may include any suitable memory devices, for example, caches, read-only memory devices, random access memory devices, magnetic storage devices, etc. The one or more memory devices 142 may store data, executable instructions, and/or various program modules utilized by the power meter 105, for example, data files 145, an operating system ("OS") 146, one or more host modules 147, a cognitive module 148, and/or an asset management module 149. The data files 145 may include any suitable data that facilitates the operation of the power meter 105 including, but not limited to, measurements data taken by the power meter 105 and/or the sensors 143, information associated with identified loads 115a-n, power consumption data for the loads 115a-n, expected power consumption data for the loads 115a-n, desired operating parameters for the loads 115a-n, generated alerts, load profile and/or usage information generated by the power meter 105, power management and/or power distribution data, and/or information that facilitates communication with one or more other components of the system 100. The OS 146 may include executable instructions and/or program modules that facilitate and/or control the general operation of the power meter 105. Additionally, the OS 146 may facilitate the execution of other software programs and/or program modules by the processors 141, such as the host modules 147, the cognitive module 148, and/or the asset management module 149.

The host modules 147 may be suitable software modules that facilitate communication with any number of external devices. Any number of host modules may be provided as desired in various embodiments of the invention. In one example embodiment, a host module 147 may facilitate the establishment of a communications session with a user device 120. For example, the host module 147 may provide server functionality that facilitates the establishment of a communications session (e.g., a wide area network session, an Internet session, etc.) between the power meter 105 and the user device 120. In this regard, information, such as graphical user interfaces and/or alerts, may be communicated to the user device 120.

The cognitive module 148 may be a suitable software module that is configured to decompose a monitored power signal into power consumption data for any number of individual loads. In operation, the cognitive module 148 may utilize model-based embedded intelligence to decompose a power signal measured by the one or more sensors 143 into constituent individual loads. In certain embodiments, the cognitive module 148 may determine an instantaneous state of the power line 110, and the cognitive module 148 may perform a grid scene analysis based at least in part upon the instantaneous state to identify individual and combined load signatures of the various loads 115a-n.

In one example embodiment, the one or more sensors 143 may measure voltage and current from the A phase, B phase and neutral wires associated with the power meter 105. For example, the A and B phase voltages may be measured from A to neutral, B to neutral and from A to B. Once the voltage and current measurements are taken and provided to the cognitive module 148, harmonics, power factors, derivatives, and other synthetic instruments may be calculated and used as inputs to a cognitive decomposition algorithm.

As desired, indoor and outdoor temperatures may also be utilized in one embodiment, in addition to the voltage and current measurements. The temperature measurements may be taken directly from the sensors 143 or may be communicated digitally to the meter. In certain embodiments, the temperature data may be received from one or more loads 115a-n, such as an HVAC system, cable TV, commercial freezer, or other load. The temperatures may be used by the cognitive decomposition algorithm to more accurately estimate the power consumption of certain loads, such as heat and cooling loads. As desired, the time of day and/or date may also be used as inputs to the cognitive decomposition algorithm. This information may also come from a wide variety of different sources. The date and time data can be used to help reduce error and simplify the cognitive decomposition algorithms.

Based upon received voltages and/or currents measured from the power line 110, the cognitive module 148 may determine an instantaneous state of the line 110. This includes power load signature detection and preliminary classification. The result is a set of features, data, and metadata that describe the current state of the power line 110. The grid state observations may then be analyzed further at a higher level using the previous knowledge accumulated by the power meter 105. This is referred to as grid scene analysis and includes actual identification of individual and combined load signatures of power consuming systems such as household appliances. The data of interest may be analyzed over multiple time scales from instantaneous values to identify loads turning on and off to hourly, daily, monthly, and yearly scales to observe longer time scale cycles and trends. A laundry cycle, for example, may take multiple hours to observe a weekly pattern of doing laundry.

In certain embodiments, a Bayesian-inference-based classifier can be used for the decomposition algorithm. A transient detector may detect and record transient patterns including voltage and current amplitude, before and after differentials, harmonics, phases, and other parameters designated to model a transient. A transient index may be obtained from a pre-programmed lookup table of transient patterns. Utilizing stored conditional probability information associated with the likelihood of turning an appliance on and off, a transient pattern may be evaluated, and the cognitive module 148 may identify or select an appliance with the highest probability of creating the observed transient pattern. In this regard, power consumption signatures for particular loads 115a-n may be determined.

One example of the operations that may be performed by the cognitive module 148 is described in U.S. Patent No. 7,693,670, which is incorporated by reference herein in its entirety.

The asset management module 149 may be a suitable software module that is configured to evaluate power consumption data and/or signatures for individual loads 115a-n and determine whether the loads 115a-n are operating within one or more desired parameters and/or desired operating conditions. In operation, the asset management module 149 may receive respective power consumption data, such as power consumption signatures, for a plurality of loads 115a-n from the cognitive module 148. The asset management module 149 may evaluate the power consumption data in order to determine whether the loads 115a-n are operating properly.

In certain embodiments, the asset management module 149 may identify expected power consumption data, such as an expected power consumption signature, for a load. A wide variety of suitable methods and/or techniques may be utilized to identify or determine expected power consumption data. For example, normal or expected power consumption data for an appliance or other electrical load may be received from a manufacturer or other data source and stored in memory. As another example, historical information associated with the power consumption of the load may be utilized to calculate or determine an expected or baseline power consumption signature for the load. As desired, any historical period may be evaluated, such as a previous week, a previous month, a previous year, etc. Additionally, in certain embodiments, seasonal differences and/or ambient conditions may be taken into consideration during the determination of expected power consumption data. For example, an expected power consumption for an air conditioning unit may be determined based upon seasonal information and/or information for time periods (e.g., days) having similar conditions to those associated with currently monitored power consumption.

Once an expected power consumption has been determined for a load, the asset management module 149 may compare the expected power consumption to a monitored power consumption for the load. Based at least in part upon the comparison, the asset management module 149 may determine whether the load is operating properly. For example, the asset management module 149 may determine whether the power consumption signature for the load satisfies one or more desired operating parameters and/or operating conditions, such as maximum power consumption parameters and/or operating time parameters. As desired, default operating parameters and/or user-defined operating parameters may be utilized. In the event that the load is determined to not be operating properly, the asset management module 149 may take and/or direct any number of control actions. For example, the asset management module 149 may generate an alarm or alert message that is output for communication to a user device 120 and/or central system 125.

In certain embodiments, the asset management module 149 may compare a power consumption signature for a load to one or more stored power consumption signatures associated with load faults and/or abnormal conditions. In this regard, the asset management module 149 may identify or diagnose faults and/or abnormal conditions for the load. For example, a power consumption signature for an air conditioner may be compared to a stored signature associated with an air conditioner having a faulty compressor. In the event that a correspondence is identified, then the asset management module 149 may determine that the air conditioner likely has a faulty or failing compressor.

As desired, the asset management module 149 may be configured to generate and/or format any number of messages and/or graphical user interfaces associated with the decomposition of a monitored power signal and/or the evaluation of power consumption data for individual loads. For example, various usage and/or reporting messages may be generated for communication to the central system 125. As another example, various messages and/or graphical user interfaces may be generated for communication to any number of user devices 120. For example, once a communications session (e.g., an Internet communications session, etc.) has been established between the power meter 105 and a user device 120, the asset management module 149 may generate any number of graphical user interfaces (e.g., Web pages, etc.) that may be utilized to present information to the user.

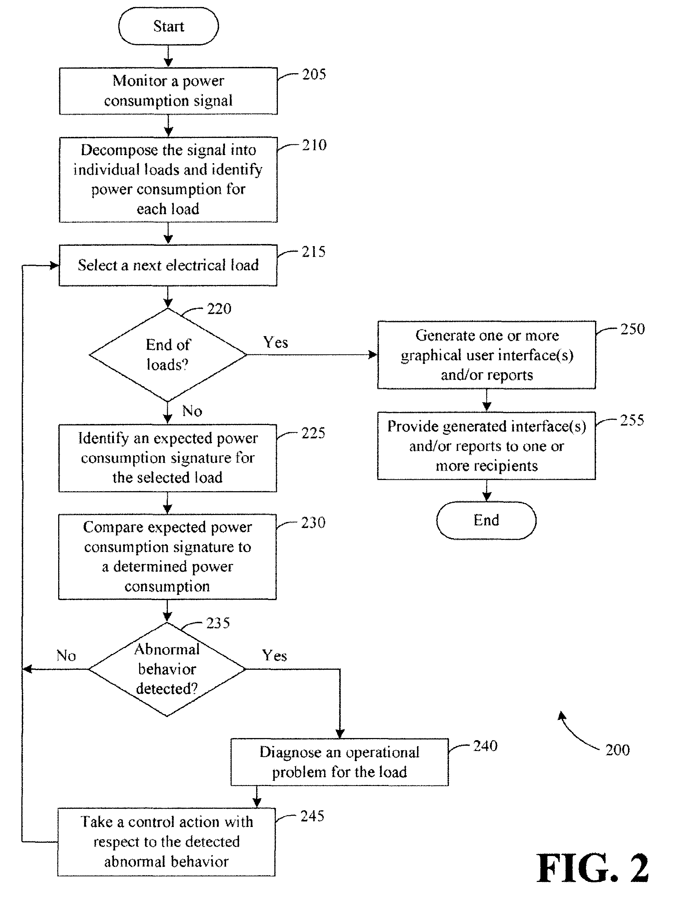

One example of the operations of the asset management module 149 is described in greater detail below with reference to FIG. 2.

With continued reference to the power meter 105, the one or more sensors 143 may facilitate the monitoring of the power line 110 and/or the measurements of any number of desired power consumption or energy consumption variables. For example, the sensors 143 may monitor voltage and/or current associated with the power line 110. As desired, the sensors 143 may also monitor a wide variety of other parameters, such as temperature and/or other conditions that may be taken into account by the cognitive module 148. A wide variety of different types of sensors may be utilized as desired in various embodiments of the invention, such as voltage sensors, current sensors, temperature sensors, etc.

The one or more communications or network interfaces 144 may facilitate connection of the power meter 105 to any number of suitable networks, such as one or more network(s) 130 that facilitate communication with user devices 120 and/or the central system 125. In this regard, the power meter 105 may receive data from and/or communicate data to other components of the system 100. As desired, the power meter 105 may additionally include any number of network cards and/or network interface devices that facilitate communication with the various networks 130. In one embodiment, the power meter 105 may include a suitable Internet-enabled network card or other communication board that facilitates connection of the power meter 105 to a wide area network. In certain embodiments, the Internet-enabled network card may permit the power meter 105 to establish an Internet Protocol ("IP") address that allows other devices to access the power meter 105 and/or establish a communications session with the power meter 105. Other examples of network cards and/or communications devices that may be included in the power meter 105 include an AMI board, a Global System for Mobile Communications ("GSM") transceiver, a General Packet Radio Service ("GPRS") transceiver, another cellular communications device, a Broadband over Power Lines ("BPL") adaptor, any number of Ethernet cards, etc.

The power meter 105 may typically receive power from a connected power grid and/or power line 110. Additionally, as desired in certain embodiments, the power meter 105 may include any number of suitable back-up power supplies, such as one or more batteries and/or one or more super capacitors.

With continued reference to FIG. 1, the system 100 may include any number of electrical loads 115a-n that are connected to the power line 110 and that receive power from the power line 110 and/or a home power distribution network. A wide variety of different types of electrical loads 115a-n may be utilized as desired in various embodiments of the invention, such as various appliances, lights, air conditioners, heaters, etc.

In certain embodiments, one or more central systems 125 may be in communication with the power meter 105. A central system 125 may be a central system provided by or associated with a power company or other service provider. Additionally, various customers may include systems that function in a similar manner as that described for the central system 125. The central system 125 may include any number of processor-driven devices that facilitate the receipt and processing of messages and/or collected data. For example, the central system 125 may include any number of personal computing devices, server computers, and/or other computing devices. A computing device associated with the central system 125 may include any number of processors, memory devices, and/or communications interfaces. These components may be similar to those described above with reference to the power meter 105. In operation, the central system 125 may receive and process messages and/or data output by the power meter 105. For example, the central system 125 may collect power consumption data, usage data, alerts associated with abnormal conditions (e.g., voltage conditions, current conditions, frequency conditions, etc.). The central system 125 may also provide data, such as expected power consumption data, to the power meter 105. In certain embodiments, the processing described as being performed by the cognitive module 148 and/or the asset management module 149 may be performed by the central system 125. Additionally, in certain embodiments, the central system 125 may host communications sessions in a similar manner as that described above for the power meter 105. For example, the central system 125 may include a suitable Web server that outputs graphical user interfaces to user devices 120.

With continued reference to FIG. 1, one or more user devices 120 may be in communication with the power meter 105. Any number of user devices 120 may be utilized as desired in various embodiments, such as mobile devices, personal digital assistants, personal computers, server computers etc. Although user devices 120 are described as devices associated with individual customers or users, other devices may be utilized in various embodiments of the invention to receive information from a power meter 105, such as a server computer and/or analysis system associated with a business or commercial entity. A user device 120 may include any number of processor-driven devices that facilitate communication with the power meter 105 and/or the receipt of messages and/or presentation information output by the power meter 105. As such, a user device 120 may include any number of processors, memory devices, and/or communications interfaces. These components may be similar to those described above with reference to the power meter 105. In operation, a user device 120 may be configured to receive a message output by the power meter 105, such as an email message or a short message service ("SMS") message. In other embodiments, a user device 120 may request the establishment of a communications session (e.g., an Internet communications session) with the power meter 105. For example, an IP address associated with the power meter 105 may be accessed. Once a communications session has been established, the user device 120 may receive information associated with one or more graphical user interfaces (e.g., Web pages) and/or other messages from the power meter 105, and the user device 120 may format the received information and present at least a portion of the received information to a user.

In certain embodiments, a user device 120 may be a device or system associated with a monitored structure, such as a home energy management system or component. Additionally, as desired, the user device 120 may perform a portion of the operations described above as being performed by the cognitive module 148 and/or the asset management module 149. For example, the user device 120 may receive measurements data and/or power signal data from the power meter 105, and the user device 120 may decompose the received information into power consumption information for individual loads. The user device 120 may additionally evaluate each load in order to determine whether the load is operating within one or more predetermined parameters or conditions.

One or more wide area networks 130 may facilitate communication between the power meter 105, central system 125, and/or user devices 120. A wide variety of suitable wide area networks I30 may be utilized as desired in various embodiments of the invention, such as the Internet, a cellular network, a satellite-based network, or any other suitable wide area network.

As desired, embodiments of the invention may include a system 100 with more or less than the components illustrated in FIG. 1. Additionally, certain components of the system 100 may be combined in various embodiments of the invention. The system 100 of FIG. 1 is provided by way of example only.

FIG. 2 is a flow diagram of an example method 200 for evaluating load power consumption, according to an illustrative embodiment of the invention. The method 200 may be utilized in association with one or more load power consumption evaluation systems, such as the system 100 illustrated in FIG. 1. In certain embodiments, the operations of the method 200 may be performed by a suitable cognitive module and/or asset management module incorporated into and/or in communication with a power meter, such as the cognitive module 148 and/or the asset management module 149 associated with the power meter 105 of FIG. 1.

The method 200 may begin at block 205. At block 205, a power consumption or an energy consumption signal may be monitored. For example, one or more suitable sensors, such as the sensors 143 illustrated in FIG. 1, may monitor one or more energy consumption variables associated with a power line monitored by the power meter 105. Examples of energy consumption variables that may be monitored include a voltage and/or a current on the power line. In certain embodiments, the sensors 143 may generate one or more power consumption output signals that are processed by the cognitive module 148.

At block 210, a power consumption signal may be decomposed into power consumption information associated with a plurality of individual loads supplied by the power line, such as the loads 115a-n illustrated in FIG. 1. For example, a power consumption signature for each of the individual loads may be determined by the cognitive module 148. A wide variety of suitable methods and/or techniques may be utilized as desired to decompose a monitored power consumption signal, such as those described above with reference to FIG. 1. As one example, an instantaneous state of the power line may be determined at various points in time and/or in real-time, and a grid scene analysis may be performed to identify load signatures for the individual loads 115a-n. In this regard, a plurality of individual loads 115a-n may be identified, and power consumption data may be associated with each of the loads 115a-n.

Once individual load power consumption data and/or power consumption signatures have been determined, the individual load data may be processed by the asset management module 149. At block 215, a next electrical load (generically referred to as load 115) may be selected for analysis. At block 220, a determination may be made as to whether the end of the loads 115a-n has been reached. If it is determined at block 220 that the end of the loads 115a-n has been reached, then operations may continue at block 250 described in greater detail below. If, however, it is determined at block 220 that the end of the loads 115a-n has not been reached, then operations may continue at block 225, and the selected load 115 may be evaluated or analyzed.

At block 225, expected power consumption information for the selected load 115 may be identified or determined. For example, an expected power consumption signature for the selected load 115 may be identified or determined. A wide variety of suitable methods and/or techniques may be utilized as desired to identify expected power consumption information for the selected load 115. For example, stored information that has been received from a manufacturer of a load (e.g., an appliance manufacturer, etc.), prestored on the power meter 105, and/or calculated by the power meter 105, may be accessed from memory. As another example, historical power consumption data for the selected load may be processed to calculate an expected or baseline power consumption signature for the load 115. In this regard, an expected power consumption signature may be adapted over time as the power meter 105 collects and evaluates additional information relating to the load.

At block 230, expected power consumption information for the selected load 115 may be compared to the monitored or determined power consumption information for the selected load. For example, a determined power consumption signature may be compared to an expected power consumption signature for the selected load 115. At block 235, a determination may be made based at least in part upon the comparison as to whether any abnormal behavior is detected for the selected load I15. For example, a determination may be made as to whether the selected load is operating within one or more predetermined power consumption parameters or predetermined conditions, such as user-defmed conditions, conditions established from historical data, and/or default conditions. In certain embodiments, a determination may be made as to whether differences between an expected signature and a determined signature exceed one or more threshold values. In other embodiments, a determination may be made as to whether monitored power consumption exceeds one or more threshold values or conditions. In yet other embodiments, a determination may be made as to whether operating time for the selected load exceeds predetermined operating time parameters.

If it is determined at block 235 that no abnormal behavior is detected for the selected load 115, then operations may continue at block 215, and a next load may be selected for evaluation. If, however, it is determined at block 235 that abnormal behavior is detected, then operations may continue at block 240. At block 240, which may be optional in certain embodiments of the invention, an operational problem for the selected load 115 may be diagnosed. A wide variety of suitable methods and/or techniques may be utilized as desired to diagnose an operational problem. For example, a monitored signature for the selected load 115 may be compared to one or more stored power consumption signatures associated with specific problems for the selected load 115. An operational problem may then be diagnosed based upon an identified or determined correspondence between the monitored signature and a stored signature. For example, a failing compressor operational problem may be identified for an air conditioner based upon a correspondence between a monitored power consumption signature for the air conditioner and a stored signature associated with a failing compressor. Operations may then continue at block 245.

At block 245, any number of control actions may be taken or directed based at least in part upon the identified abnormal behavior and/or a diagnosed operational problem. Examples of suitable control actions include, but are not limited to, turning off the selected load, opening one or more relays that control the provision of power to the selected load, generating an alert message to be communicated to a user and/or central system, and/or documenting an alert. As desired, alerts and/or diagnosed operational problems may be escalated over time in order to increase the probability of a diagnosed problem being addressed. For example, diagnosed operational problems that persist for a predetermined period of time (e.g., several days, a week, a month, etc.) may result in escalated control actions. Following block 245, operations may continue at block 215, and a next load may be selected for evaluation.

Once each of the loads 115a-n has been evaluated, operations may continue at block 250. At block 250, one or more graphical user interfaces and/or reports may be generated. The generated graphical user interfaces and/or reports may be provided to one or more recipients (e.g., user devices, a central system, etc.) at block 255. The generated interface(s) may include information associated with the operation of the power meter 105, power consumption information for individual loads, expected power consumption information for individual loads, identification of abnormal conditions, information associated with identified or determined operational problems, and/or generated alerts. For example, a generated graphical user interface may include a power usage summary or power bill that includes power consumption information for individual loads compared to expected power consumption information.

The method 200 of FIG. 2 may end following block 255. Alternatively, as desired, the operations of the method 200 may be continuously performed in a repeating loop.

The operations described and shown in the method 200 of FIG. 2 may be carried out or performed in any suitable order as desired in various embodiments of the invention. Additionally, in certain embodiments, at least a portion of the operations may be carried out in parallel. Furthermore, in certain embodiments, less than or more than the operations described in FIG. 2 may be performed. Additionally, in certain embodiments, the operations set forth in FIG. 2 may be performed in a loop as a location is monitored by a power meter.

The invention is described above with reference to block and flow diagrams of systems, methods, apparatus, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the scope of the appended claims.

This written description uses examples to disclose the invention, including the best mode, and also to enable any person skilled in the art to practice the invention, including making and using any devices or systems and performing any incorporated methods. The patentable scope of the invention is defined in the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method (200) comprising:
measuring (205), by a power meter (105), a power line signal for a structure associated with the power meter (105);
decomposing (210), by the power meter (105), the power line signal into respective power consumption data for a plurality of individual loads (115a-n) powered by the power line signal;
comparing (230), by the power meter (105), the power consumption data for a load (115) included in the plurality of individual loads (115a-n) to expected power consumption data for the load (115); and
determining (235), based at least in part upon the comparison, whether the load (115) is operating within one or more desired parameters.

2. The method (200) of Claim 1, wherein it is determined that the load (115) is not operating within one or more desired parameters, and further comprising:
directing (245), by the power meter (105) based at least in part upon the determination, at least one control action.

3. The method (200) of Claim 2, wherein directing (245) at least one control action comprises directing at least one of (i) communication of an alert message or (ii) control of electrical power provided to the load (115).

4. The method (200) of Claim 1, 2 or 3, wherein comparing (230) the power consumption data to expected power consumption data comprises:
determining (210) a power consumption signature for the load (115);
identifying (225) an expected power consumption signature for the load; and
comparing (230) the determined power consumption signature to the expected power consumption signature.

5. The method (200) of Claim 4, wherein identifying (225) an expected power consumption signature comprises accessing a stored expected power consumption signal.

6. The method (200) of Claim 4 or Claim 5, wherein identifying (225) an expected power consumption signature comprises identifying an expected power consumption signature calculated based at least in part upon historical power consumption data for the load (115).

7. The method (200) of any one of Claims 1 to 6, wherein it is determined that the load is not operating within one or more desired parameters, and further comprising:
comparing the power consumption data to stored power consumption data associated with one or more operational problems associated with the load (115); and
identifying (240), based at least in part upon the comparison, an operational problem associated with the load (115).

8. The method (200) of any one of Claims 1 to 7, wherein measuring (205) a power line signal comprises measuring at least one of a current or a voltage on a power line (110) configured to supply electrical power to the plurality of individual loads (115a-n).

9. The method (200) of any one of Claims 1 to 8, wherein decomposing (210) the power line signal into respective power consumption data comprises:
determining, by the power meter (105), an instantaneous state of a power line (110); and
performing a grid scene analysis based at least in part upon the instantaneous state to identify individual and combined load signatures of the plurality of individual loads (115a-n).

10. The method (200) of any one of Claims 1 to 9, further comprising:
generating (250), by the power meter (105), a graphical presentation comprising at least one of (i) power consumption data for the load (115), (ii) expected power consumption data for the load (115), or (iii) an indication of whether the load (115) is operating within the one or more desired parameters; and
communicating (225), by the power meter (105) to a recipient device (120, 125), the generated graphical presentation.

11. A power meter (105), comprising:
at least one memory (142) configured to store computer-executable instructions;
at least one sensor (143) configured to monitor at least one desired energy consumption variable associated with a plurality of individual loads and generate at least one output signal associated with the monitoring; and
at least one processor (141) configured to access the at least one memory and execute the computer-executable instructions to perform the method of any one of Claims 1 to 10.

12. The power meter of Claim 11, wherein the at least one sensor (143) comprises at least one of (i) a voltage sensor or (ii) a current sensor.
